# EUROPÄISCHE PATENTSCHRIFT

(11) **EP 2 595 855 B1**
(45) Veröffentlichungstag und Bekanntmachung des Hinweises auf die Patenterteilung: **08.08.2018**
(21) Anmeldenummer: 11723943.4
(22) Anmeldetag: 01.06.2011
(51) Int. Cl.: B62D 15/02, B60W 30/06

(54) **VERFAHREN ZUR UNTERSTÜTZUNG EINES FAHRERS EINES KRAFTFAHRZEUGS**
PROCESS TO ASSIST A DRIVER OF A VEHICLE
PROCÉDÉ D'ASSITANCE AU CONDUCTEUR D'UN VEHICULE

(30) Priorität: 22.07.2010 DE 102010031672
(43) Veröffentlichungstag der Anmeldung: 29.05.2013
(73) Patentinhaber: Robert Bosch GmbH, 70442 Stuttgart (DE)
(72) Erfinder: GRUETZMANN, Andreas, 70176 Stuttgart (DE); NIEMZ, Volker, 71277 Rutesheim (DE)
(86) Internationale Anmeldenummer: PCT/EP2011/059094
(87) Internationale Veröffentlichungsnummer: WO 2012/010365

(56) Entgegenhaltungen:
- DE-A1- 19 648 943
- DE-A1-102004 046 589
- DE-A1-102007 029 773
- JP-A- 2007 326 414

## Beschreibung

### Stand der Technik

Die Erfindung geht aus von einem Verfahren zur Unterstützung eines Fahrers eines Kraftfahrzeugs bei einem Fahrmanöver gemäß dem Oberbegriff des Anspruchs 1. Weiterhin betrifft die Erfindung auch eine Vorrichtung zur Durchführung des Verfahrens.

Bei Verfahren und Systemen, die den Fahrer bei Fahrmanövern unterstützen, wird unterschieden in reine abstandsmessende Systeme, semiautomatische Systeme und vollautomatische Systeme. Bei den abstandsmessenden Systemen wird die Umgebung des Fahrzeugs erfasst und der Abstand zu Objekten in der Umgebung des Fahrzeugs wird dem Fahrer angezeigt. Weitere Unterstützung zu geeigneten Lenkeinschlägen, um ein Fahrmanöver durchzuführen, werden dem Fahrer nicht gegeben.

Bei semiautomatischen Systemen wird anhand der erfassten Umgebung eine geeignete Trajektorie berechnet, entlang der das Fahrmanöver, beispielsweise ein Einparkmanöver oder ein Ausparkmanöver, durchgeführt werden kann. Zum Fahren entlang der Trajektorie werden dem Fahrer Lenkhinweise gegeben, der Fahrer lenkt das Fahrzeug noch selbsttätig und führt auch selbsttätig die Längsbewegung des Fahrzeugs, das heißt Bremsen, Beschleunigen und Geschwindigkeit halten, durch. Zusätzlich zu diesen Systemen sind auch solche Systeme bekannt, bei denen vom System die Lenkung übernommen wird. Dem Fahrer obliegt in diesem Fall lediglich die Längsführung des Fahrzeugs.

Demgegenüber wird bei vollautomatischen Systemen sowohl die Längsführung als auch die Querführung, d.h. die Lenkung des Fahrzeugs, vom System übernommen und der Fahrer hat lediglich eine überwachende Funktion.

Ein Verfahren und eine Vorrichtung zur Unterstützung eines Fahrers eines Fahrzeugs beim Ausparken aus einer Parklücke ist zum Beispiel in WO-A 2009/121534 beschrieben. Hierbei wird zunächst die Länge der Parklücke vermessen und anhand der durch die Vermessung gewonnenen Daten eine Ausparktrajektorie berechnet. Anschließend wird entlang der Ausparktrajektorie das Fahrzeug automatisch bewegt. Um eine Kollision mit die Parklücke begrenzenden Objekten zu vermeiden, wird während des Ausparkens der Abstand zu die Parklücke begrenzenden Objekten überwacht. Sobald das Fahrzeug in einer Position ist, die ein kollisionsfreies Ausparken ermöglicht, wird der automatische Ausparkvorgang beendet. Ein ähnliches Verfahren ist aus der gattungsbildenden DE-A-2007 029773 bekannt.

Nachteil dieser Verfahren ist es jedoch, das zum Zeitpunkt der Übergabe nach Beendigung der automatischen Steuerung ein beliebiger auch sehr großer Lenkwinkel eingestellt sein kann, was dazu führen kann, dass nach der Übergabe bei gehaltenem Lenkeinschlag das Fahrzeug vom Fahrer zu schnell bewegt wird und die Gefahr einer Kollision mit zum Beispiel dem Gegenverkehr besteht.

### Offenbarung der Erfindung

### Vorteile der Erfindung

Um Kollisionen mit Fahrzeugen des Gegenverkehrs zum Beispiel aufgrund der Unaufmerksamkeit des Fahrers oder durch Unverständnis des Systems seitens des Fahrers zu vermeiden und solchen Kollisionen vorzubeugen, werden bei dem Verfahren zur Unterstützung eines Fahrers eines Kraftfahrzeugs bei einem Fahrmanöver, bei dem das Fahrzeug automatisch entlang einer zuvor berechneten Trajektorie geführt wird oder die Querführung zur Fahrt entlang der Trajektorie automatisch durchgeführt wird und nach Beendigung des Fahrmanövers die Steuerung des Fahrzeugs wieder an den Fahrer übergeben wird, vor und/oder während der Übergabe der Steuerung an den Fahrer Informationen über die Umgebung des Fahrzeugs und geeignete Lenkeinstellungen an den Fahrer gegeben.

Dadurch, dass der Fahrer des Fahrzeuges über die Umgebung des Fahrzeugs informiert wird und geeignete Lenkeinstellungen an den Fahrer gegeben werden, kann der Fahrer auf einer optimalen Trajektorie das Fahrzeug nach Beendigung des automatischen Fahrmanövers weiter bewegen. Insbesondere wenn das Fahrmanöver ein Ausparkmanöver aus einer Längsparklücke ist, die parallel zu einer gefahrenen Straße ausgerichtet ist, kann durch die Information vermieden werden, dass der Fahrer das Fahrzeug zu schnell mit einem starken Lenkeinschlag beschleunigt und so in möglichen Gegenverkehr gerät. Durch die Ausgabe der Lenkinformationen kann das Fahrzeug auch nach Beendigung des automatischen Fahrmanövers auch vom Fahrer weiter entlang der optimalen Trajektorie zum Einfädeln in den Verkehr bewegt werden. Gemäß der Erfindung erhält der Fahrer des Fahrzeugs eine Warnung, wenn der von ihm bei Übergabe der Steuerung gewählte Lenkeinschlag zu einer Gefährdung der Umgebung führen würde. Als Gefährdung der Umgebung ist hier insbesondere die Kollision mit Objekten in der Umgebung des Fahrzeugs zu verstehen. Solche Objekte in der Umgebung des Fahrzeugs sind zum Beispiel weitere am Straßenverkehr teilnehmende Fahrzeuge, wobei hierunter sowohl zweispurige Kraftfahrzeuge wie Autos oder Lastkraftwagen als auch einspurige Kraftfahrzeuge wie Fahrräder oder Motorräder zu verstehen sind. Weiterhin sind Objekte, die gefährdet werden können, zum Beispiel eine Parklücke oder eine Fahrbahn begrenzende Mauer, Pflanzkübel oder Pflanzen sowie am Straßenverkehr teilnehmende Personen, beispielsweise Fußgänger.

Um den Fahrer des Fahrzeugs warnen zu können, wird die Umgebung während des Fahrmanövers weiterhin erfasst und der Abstand zu Objekten in der Umgebung wird dem Fahrer des Fahrzeugs angezeigt. Zusätzlich erhält der Fahrer eine Information über den aktuellen Lenkeinschlag, so dass dieser genau informiert ist, in welche Richtung die lenkbaren Räder des Fahrzeugs stehen und in welche Richtung sich somit das Fahrzeug bei Weiterfahrt bewegen wird.

Um zu vermeiden, dass der Fahrer des Fahrzeugs zu früh in den Ausparkvorgang eingreift oder alternativ das Fahrzeug zu lange in einer ungünstigen Position stehen bleibt, bis der Fahrer die Steuerung des Fahrzeugs übernimmt, ist es weiterhin vorteilhaft, wenn der Fahrer informiert wird, wenn die Übergabe der Steuerung erfolgt. Die Information des Fahrers kann zum Beispiel optisch oder akustisch erfolgen. So ist es zum Beispiel möglich, dass der Fahrer einen akustischen Hinweis erhält, dass die Lenkung übergeben wird. Auch auf einer entsprechenden optischen Anzeige in einem geeigneten Anzeigeelement, beispielsweise einem Monitor im Sichtbereich des Fahrers, beispielsweise einem Monitor eines Navigationssystems, kann die entsprechende Information ausgegeben werden. Hierbei ist es weiterhin vorteilhaft, wenn neben dem Hinweis, dass die Steuerung übergeben wird auch ein Hinweis erscheint, dass der Fahrer den fließenden Verkehr zu beachten hat.

Damit der Fahrer nach Übergabe der Steuerung das Fahrzeug weiterhin entlang einer optimalen Trajektorie bewegen kann, ist es weiterhin bevorzugt, wenn dem Fahrer sowohl eine prädizierte Trajektorie aufgrund des aktuellen Lenkeinschlags als auch eine optimale Trajektorie zum Zeitpunkt der Übergabe dargestellt werden. Die Darstellung der Trajektorie kann zum Beispiel zweidimensional in Draufsicht auf einem Anzeigegerät erfolgen, beispielsweise dem Monitor eines Navigationssystems. Auch eine separate Anzeigevorrichtung ist möglich. Durch die Darstellung der prädizierten Trajektorie aufgrund des Lenkeinschlages sieht der Fahrer, in welche Richtung sich das Fahrzeug bewegen würde, wenn keine Änderung des Lenkeinschlages erfolgt. Durch die Anzeige der optimalen Trajektorie wird dem Fahrer angezeigt, wie dieser das Fahrzeug ohne eine Gefährdung der Umgebung am besten weiter bewegt.

Um das Fahrzeug nach Übergabe der Steuerung an den Fahrer weiter entlang der optimalen Trajektorie bewegen zu können, ist es weiterhin vorteilhaft, wenn der Fahrer zum Zeitpunkt der Übergabe der Steuerung Hinweise erhält, wie er die optimale Trajektorie erreicht. Diese Hinweise können optisch, akustisch oder haptisch erfolgen. Bevorzugt sind optische oder haptische Hinweise. Optische Hinweise können zum Beispiel durch Anzeige von Pfeilen, in welche Richtung das Lenkrad zu bewegen ist, um auf die Trajektorie zu gelangen, erfolgen. Als haptische Hinweise eignet sich zum Beispiel ein auf das Lenkrad aufgebrachtes Moment, das den Fahrer dazu führt, das Lenkrad in die richtige Richtung zu bewegen. Hierbei bleibt es dem Fahrer des Fahrzeugs jedoch jederzeit unbenommen, nicht der vom System vorgegebenen optimalen Trajektorie zu folgen sondern einen beliebigen anderen Winkel einzuschlagen und das Fahrzeug weiter zu bewegen. Dies ist zum Beispiel dann notwendig, wenn der Fahrer beim Ausparken das Fahrzeug wenden möchte, um in die entgegengesetzte Richtung zu fahren. In diesem Fall ist es notwendig, dass der Fahrer insbesondere auf Objekte in der Umgebung des Fahrzeugs, insbesondere auch auf den fließenden Verkehr sowohl in Fahrtrichtung als auch in Gegenrichtung achtet.

Insbesondere für den Fall, dass das Fahrmanöver ein Ausparkmanöver aus einer Parklücke ist, ist es weiterhin vorteilhaft, wenn Fahrbahninformationen zur Erkennung von Einbahnstraßen oder Straßen mit mehreren Fahrbahnen in eine Richtung genutzt werden. Hierdurch ist es möglich, unnötige Warnungen zu vermeiden. Bei Einbahnstraßen ist grundsätzlich davon auszugehen, dass kein Gegenverkehr existiert. Bei Fahrbahnen mit mehreren Fahrbahnen ist die Gefahr, dass das Fahrzeug bei einer steilen Einfahrt in den fließenden Verkehr auf die Gegenfahrbahn gerät ebenfalls geringer als bei nur einer Fahrbahn in jede Richtung. Bei mehreren Fahrbahnen oder bei Einbahnstraßen ist insbesondere auf den fließenden Verkehr zu achten und zu überwachen, ob sich andere Fahrzeuge nähern.

Um sicherzustellen, dass bei einer Weiterfahrt entlang der prädizierten Trajektorie aufgrund des aktuellen Lenkradwinkels eine Kollision mit Objekten in der Umgebung des Fahrzeuges droht, ist es bevorzugt, wenn bei einer Bewegung des Fahrzeugs entlang der aufgrund des Lenkradwinkels prädizierten Trajektorie nach Übergabe an den Fahrer und bei Erfassung eines Objektes, mit dem das Fahrzeug bei unveränderter Richtung kollidieren würde, eine automatische Notbremsung durchgeführt wird. Durch die automatische Notbremsung ist es möglich, das Fahrzeug rechtzeitig vor einer Kollision mit dem sich nähernden Objekt zum Stillstand zu bringen und auf diese Weise eine Kollision zu verhindern. Für den Fall, dass eine Notbremsung erforderlich wird, ist es weiterhin vorteilhaft, wenn der Fahrer über die bevorstehende Notbremsung informiert wird. Dies kann zum Beispiel optisch erfolgen. Alternativ ist es auch möglich, zunächst einen Warnruck durchzuführen, indem das Fahrzeug zum Beispiel eine kurzfristige Beschleunigungsänderung erfährt und dann den Bremsvorgang einzuleiten. Der Warnruck kann durch ein erstes Anbremsen und ein anschließendes kurzes Beschleunigen realisiert werden. Durch die Information, beispielsweise durch den Warnruck kann der Fahrer sich auf die bevorstehende Notbremsung vorbereiten. Wenn die Notbremsung optisch angezeigt wird, so ist es zum Beispiel möglich, dass ein Warnsignal aufleuchtet oder eine entsprechende Information in der Anzeigevorrichtung vorgesehen ist. Die Anzeigevorrichtung ist hierbei vorzugsweise die gleiche, mit der auch die Trajektorie dargestellt wird.

Das erfindungsgemäße Verfahren eignet sich insbesondere für Fahrmanöver zum Ausparken aus einer Parklücke, insbesondere einer Längsparklücke, die parallel zu einer Fahrbahn angeordnet ist. Das Verfahren kann jedoch auch zum Ausparken aus einer Querparklücke oder für beliebige andere Fahrmanöver, zum Beispiel Befahren von engen Straßen eingesetzt werden.

Eine geeignete Vorrichtung zur Durchführung des Verfahrens umfasst Mittel zur Steuerung des Fahrzeugs entlang einer zuvor berechneten Trajektorie sowie Mittel zur Ausgabe von Informationen über die Umgebung des Fahrzeugs und geeignete Lenkeinstellungen an den Fahrer vor und/oder während der Übergabe der Steuerung an den Fahrer.

Geeignete Mittel zur Steuerung des Fahrzeugs entlang einer zuvor berechneten Trajektorie umfassen zum Beispiel ein Einparkhilfesteuergerät. Dieses kann auch zum Ausparken oder zur Durchführung beliebiger anderer Fahrmanöver genutzt werden. Vom Steuergerät werden dann Signale zum Beispiel an Stellmotoren für die Lenkung gegeben, um das Fahrzeug so zu lenken, dass dieses einer vom Einparkhilfesteuergerät berechneten Trajektorie folgt. Zusätzlich werden auch Informationen zum Beispiel an ein ESP (elektronisches Stabilitätsprogramm)-Steuergerät oder ein beliebiges anderes Steuergerät gegeben, mit dem die Längsführung des Fahrzeugs überwacht wird, das heißt, das Fahrzeug beschleunigt und abgebremst wird.

Wie zuvor bereits erwähnt, eignet sich als Mittel zur Ausgabe von Informationen zum Beispiel ein Monitor, auf dem in zweidimensionaler Darstellung in Draufsicht das Fahrzeug und die Trajektorien, sowie Objekte in der Umgebung des Fahrzeugs gezeigt werden.

Auf dem Monitor können dann auch Warnungen an den Fahrer ausgegeben werden.

Wenn sich Objekte in der Umgebung des Fahrzeugs befinden, ist es möglich, den Fahrer zu warnen. Die Warnung kann zum Beispiel optisch erfolgen. Bei einem ausreichend großen Abstand, so dass bei einer Weiterbewegung des Fahrzeugs keine Kollision mit einem Objekt droht, ist es zum Beispiel möglich, die Objekte grün darzustellen oder eine grüne Anzeige zu wählen, die dem Fahrer anzeigt, dass keine Objekte in der Nähe des Fahrzeugs sind. Bei einer weiteren Annäherung, die jedoch noch keine akute Gefährdung darstellt, ist dann beispielsweise eine gelbe Darstellung und bei einer Entfernung des Objekts, die bei einer Weiterfahrt zu einer Kollision führen würde, ist eine rote Darstellung bevorzugt. Die Wahl der Farben Grün, Gelb und Rot in Abhängigkeit von der Gefährdungsstufe ist sinnvoll, da ein Verkehrsteilnehmer diese Farben mit den entsprechenden Hinweisen verbindet. So wird zum Beispiel im Allgemeinen die Farbe Rot gewählt, wenn eine Gefährdung droht oder das Fahrzeug unmittelbar anzuhalten ist.

### Kurze Beschreibung der Zeichnungen

Ausführungsbeispiele der Erfindung sind in der Figur dargestellt und werden in der nachfolgenden Beschreibung näher erläutert.

Die einzige Figur zeigt schematisch ein aus einer Parklücke ausparkendes Fahrzeug.

### Ausführungsformen der Erfindung

In der einzigen Figur ist beispielhaft ein ausparkendes Fahrzeug aus einer Längsparklücke dargestellt.

Das in der einzigen Figur dargestellte Ausparkmanöver aus einer Parklücke 1 ist lediglich beispielhaft zu verstehen. Das erfindungsgemäße Verfahren lässt sich neben dem Ausparken aus einer Parklücke 1 auch auf beliebige andere Fahrmanöver, beispielsweise Rangiermanöver oder Fahrten in einer engen Umgebung bei beispielsweise Befahren von engen Straßen, einsetzen.

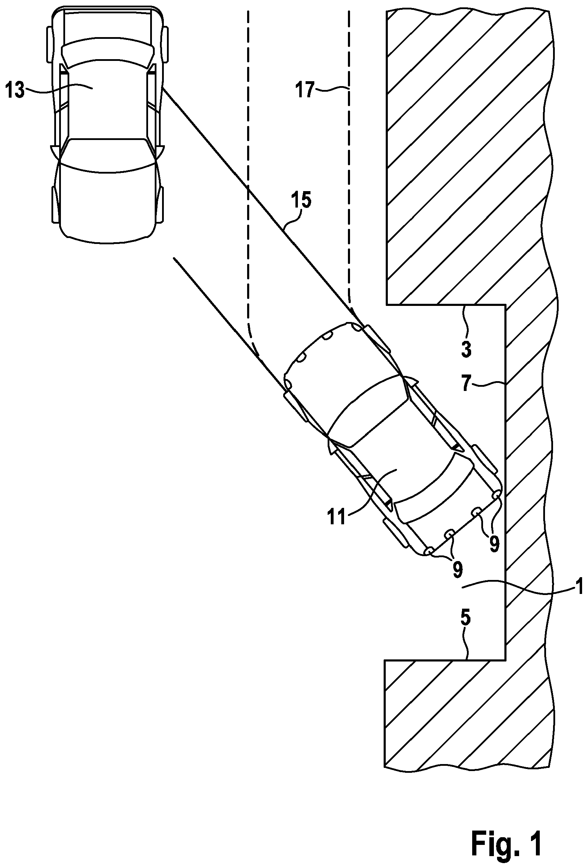

Eine Parklücke 1, die als Längsparklücke gestaltet ist, wie in Figur 1 dargestellt, umfasst im Allgemeinen eine vordere Begrenzung 3 und eine hintere Begrenzung 5. Die vordere Begrenzung 3 und die hintere Begrenzung 5 können zum Beispiel von weiteren parkenden Fahrzeugen gebildet werden. Auch ist es möglich, dass die vordere Begrenzung 3 und/oder die hintere Begrenzung 5 zum Beispiel durch einen Pflanztrog oder eine Mauer gebildet werden. Auch jede beliebige andere Begrenzung der Parklücke 1 ist möglich. Als seitliche Begrenzung 7 dient im Allgemeinen ein Bordstein. In diesem Fall befindet sich neben der Parklücke 1 zum Beispiel ein Fußgängerweg oder auch ein unbefestigter Geländeabschnitt. Weiterhin ist es jedoch auch möglich, dass die seitliche Begrenzung 7 der Parklücke von einer Wand oder Mauer gebildet wird.

In Abhängigkeit von der Art der vorderen Begrenzung 3, der hinteren Begrenzung 5 und der seitlichen Begrenzung 7 wird zum Ausparken des Fahrzeugs eine Trajektorie berechnet, entlang der das Fahrzeug aus der Parklücke bewegt werden kann. Wenn die seitliche Begrenzung 7 ein Bordstein ist, der von dem Fahrzeug leicht überfahren werden kann, kann die Trajektorie anders berechnet werden, als wenn die seitliche Begrenzung 7 eine Mauer ist. Bei einem Bordstein als seitliche Begrenzung kann diese zum Beispiel beim Ausparkvorgang überfahren werden, was bei einer Mauer nicht möglich ist.

Aus der Geometrie der Parklücke 1, die von Sensoren 9 am auszuparkenden Fahrzeug 11 vermessen wird, wird die Trajektorie zum Ausparken des Fahrzeugs 11 berechnet. Das Fahrzeug 11 wird dann entlang dieser Trajektorie bewegt. Erfindungsgemäß erfolgt der Ausparkvorgang hierbei entweder vollautomatisch, das heißt sowohl die Längsführung als auch die Querführung des Fahrzeugs werden vom Fahrassistenzsystem übernommen, oder semiautomatisch, wobei die Querführung automatisch durchgeführt wird. Die Längsführung des Fahrzeugs ist dabei das Beschleunigen, Geschwindigkeitshalten und Abbremsen des Fahrzeugs sowie ein Richtungswechsel des Fahrzeugs, die Querführung betrifft die Lenkung des Fahrzeuges.

Als Sensoren 9 eignen sich beliebige, dem Fachmann bekannte Sensoren, mit denen die Umgebung des Fahrzeug 11 erfasst werden kann. Geeignete Sensoren 9 sind zum Beispiel Ultraschallsensoren, Infrarotsensoren, Radarsensoren oder LIDAR-Sensoren. Auch optische Sensoren, beispielsweise Kameras, können zur Erfassung der Umgebung eingesetzt werden.

Um die Querführung des Fahrzeugs zu übernehmen, ist es zum Beispiel möglich, dass vom Fahrassistenzsystem Signale an einen Stellmotor gesendet werden, der die Lenkung des Fahrzeugs übernimmt. Die Längsführung des Fahrzeugs kann zum Beispiel von einem ESP (elektronisches Stabilitätsprogramm)-Steuergerät übernommen werden, das entsprechende Signale vom Fahrassistenzsystem erhält. Das Fahrassistenzsystem hat hierzu zuvor die Trajektorie berechnet, entlang der das Fahrzeug bewegt werden muss und sorgt nun für die Steuerung entlang dieser Trajektorie.

Nach Beendigung des automatischen Fahrmanövers, zum Beispiel wenn eine Position erreicht ist, entlang der das Fahrzeug ohne Gefährdung der Umgebung aus der Parklücke bewegt werden kann oder aber bei einem beliebigen anderen Fahrmanöver nach Beendigung des Fahrmanövers ist es notwendig, dass die Steuerung wieder an den Fahrer des Fahrzeugs 11 übergeben wird. Um insbesondere bei einem Ausparkmanöver zu vermeiden, dass das Fahrzeug aufgrund der Stellung der lenkbaren Räder durch eine abrupte Beschleunigung durch den Fahrer mit einem entgegenkommenden Fahrzeug 13 kollidiert, werden dem Fahrer des Fahrzeugs 11 erfindungsgemäß Informationen über die Umgebung des Fahrzeugs und geeignete Lenkeinstellungen gegeben. Die Informationen über die Umgebung des Fahrzeugs können zum Beispiel zweidimensional in Draufsicht gegeben werden, wobei in einer Anzeige den Fahrer das eigene Fahrzeug sowie Objekte in der Umgebung dargestellt werden. Die Darstellung kann zum Beispiel wie in Figur 1 gezeigt erfolgen. Hinweise zu geeigneten Lenkeinstellungen, um zum Beispiel eine Kollision mit Objekten in der Umgebung des Fahrzeugs, insbesondere mit entgegenkommenden Fahrzeugen 13 zu vermeiden, können zum Beispiel durch Darstellung eines Lenkrades mit Richtungspfeilen, in welche Richtung das Lenkrad zu bewegen ist, gegeben werden.

Weiterhin ist es vorteilhaft, wenn sowohl eine prädizierte Trajektorie 15 dargestellt wird, entlang der sich das Fahrzeug bei unverändertem Lenkeinschlag bewegt als auch eine optimale Trajektorie 17, entlang der sich das Fahrzeug bewegen sollte, um eine mögliche Kollision mit einem entgegenkommenden Fahrzeug 13 zu vermeiden.

In der hier dargestellten Ausführungsform würde sich das Fahrzeug bei unverändertem Lenkradeinschlag geradeaus weiter in den Gegenverkehr bewegen. Bei einer anderen Einstellung der Vorderräder könnte es zum Beispiel auch so sein, dass das Fahrzeug direkt einen Bogen in den Gegenverkehr machen würde. Auch eine Bewegung bereits in Fahrtrichtung aber mit einem steileren Winkel als entlang der optimalen Trajektorie 13 ist möglich.

Um entlang der optimalen Trajektorie 17 zu fahren ist es notwendig, dass das Fahrzeug entsprechend vom Fahrer gelenkt wird. Im Allgemeinen wird der tatsächliche Weg des Fahrzeugs zwischen der prädizierten Trajektorie 15 und der optimalen Trajektorie 17 liegen, da der Fahrer während des Lenkens in Richtung der optimalen Trajektorie 17 bereits einen kleinen Weg zurücklegt. Alternativ ist es jedoch auch möglich, dass das Fahrmanöver beendet wird, wenn die lenkbaren Räder bereits in Richtung der optimalen Trajektorie gelenkt sind. Auch in diesem Fall ist jedoch ein Hinweis an den Fahrer notwendig, damit dieser rechtzeitig gegenlenkt, um zu vermeiden, dass durch einen Bogen zum Beispiel eine Kollision mit einem die vordere Begrenzung 3 bildenden Fahrzeug droht. So ist es zum Beispiel möglich, dass bei einer zu schnellen Anfahrt mit bereits eingeschlagenen Vorderrädern ein Bogen gefahren wird, der zu einer Kollision mit der Seite des die Vorderbegrenzung 3 bildenden Fahrzeugs führt. Um dies zu vermeiden ist es daher bevorzugt, dass die Übergabe der Steuerung mit geradeaus ausgerichteten Rädern erfolgt. Die prädizierte Trajektorie und die optimale Trajektorie verlaufen dann so wie in Figur 1 mit Bezugszeichen 15 bzw. 17 dargestellt.

In der hier dargestellten Ausführungsform sind die prädizierte Trajektorie 15 und die optimale Trajektorie 17 als Spuren der lenkbaren Räder gezeigt. Neben einer solchen Darstellung ist es alternativ auch möglich, die Trajektorie als eine einfache Linie darzustellen, wobei die Trajektorie zum Beispiel die Strecke ist, die vom Mittelpunkt der Hinterachse zurückgelegt wird. In diesem Fall würde die Darstellung der Trajektorie entsprechend den Weg des Mittelpunktes der Hinterachse zeigen.

Wenn bei Fahrt mit unverändert eingeschlagenen lenkbaren Rädern oder bei einer Fahrt die nicht entlang der optimalen Trajektorie durchgeführt wird, eine Kollision mit einem entgegenkommenden Fahrzeug 13 droht, ist es bevorzugt, den Fahrer zu warnen. Die Warnung kann dabei zum Beispiel optisch, akustisch und/oder haptisch erfolgen. Eine optische Warnung kann zum Beispiel durch Aufleuchten einer Warnleuchte erfolgen. Alternativ ist es auch möglich, zum Beispiel in der zweidimensionalen Darstellung das entgegenkommende Fahrzeug 13 farblich hervorzuheben. Eine akustische Warnung kann zum Beispiel durch einen Warnton erfolgen, wie dieser bereits in abstandsanzeigenden Systemen eingesetzt wird. Zur haptischen Warnung eignet sich zum Beispiel ein Warnruck, der durch eine abrupte Beschleunigungsänderung durchgeführt wird. Hierzu ist es zum Beispiel möglich, das Fahrzeug kurzzeitig zu beschleunigen und sofort wieder abzubremsen oder alternativ abzubremsen und dann den Bremsvorgang kurz zu unterbrechen, um einen Ruck zu erzeugen. Um eine Kollision mit einem entgegenkommenden Fahrzeug 13 auszuschließen ist es weiterhin vorteilhaft, wenn bei einer drohenden Kollision mit einem sich nähernden Objekt bei unveränderter Weiterfahrt des Fahrzeuges eine Notbremsung durchgeführt wird. Auch hierbei ist es vorteilhaft, wenn der Fahrer vor der Durchführung der Notbremsung gewarnt wird. Die Warnung kann dabei ebenfalls optisch, akustisch und/oder haptisch erfolgen. Bevorzugt ist auch hier eine optische Warnung durch Anzeige und eine haptische Warnung, beispielsweise durch einen Warnruck.

In Abhängigkeit von der Gefährdung, beispielsweise der einer möglichen Kollision ist es möglich, Objekte in der Umgebung des Fahrzeuges 11 in unterschiedlichen Farben darzustellen. So ist es zum Beispiel möglich, Objekte, mit denen bei einer Weiterfahrt des Fahrzeuges entlang einer prädizierten Trajektorie oder entlang der entsprechenden Richtung, die sich durch die Steuerung des Fahrers ergibt, keine Kollision droht, grün darzustellen. Wenn eine mögliche Gefährdung bei unveränderter Weiterfahrt besteht, sollten diese Fahrzeuge farblich hervorgehoben werden, zum Beispiel gelb. Bei einer unmittelbaren Gefährdung der Umgebung, beispielsweise durch eine Kollision, können diese Objekte dann zum Beispiel in Rot gezeigt werden. Hierdurch erhält der Fahrer einen Hinweis, ob eine Weiterfahrt entlang der von ihm vorgesehenen Trajektorie zu einer Gefährdung der Umgebung, beispielsweise zu einer Kollision, führt. Hierbei bedeutet die Farbe Grün, dass keine Gefährdung der Umgebung droht, die Farbe Gelb, dass eine erhöhte Aufmerksamkeit seitens des Fahrers gefordert wird und Rot, dass eine Kollision mit einem Objekt bevorsteht.

Neben der Darstellung in zweidimensionaler Form und Hervorheben der einzelnen Objekte ist es selbstverständlich alternativ auch möglich, eine andere Darstellung zu wählen. So ist es zum Beispiel auch möglich, dass lediglich Warnleuchten oder Warnanzeigen vorgesehen sind, die in Abhängigkeit von der Gefährdung in unterschiedlicher Farbe aufleuchten.

## Patentansprüche

1. Verfahren zur Unterstützung eines Fahrers eines Fahrzeugs (11) bei einem Fahrmanöver, bei dem das Fahrzeug (11) automatisch entlang einer zuvor berechneten Trajektorie geführt wird oder die Querführung zur Fahrt entlang der Trajektorie automatisch durchgeführt wird und nach Beendigung des Fahrmanövers die Steuerung des Fahrzeugs (11) wieder an den Fahrer übergeben wird, wobei vor und/oder während der Übergabe der Steuerung an den Fahrer Informationen über die Umgebung des Fahrzeugs (11) und geeignete Lenkeinstellungen an den Fahrer gegeben werden, **dadurch gekennzeichnet, dass** der Fahrer eine Warnung erhält, wenn der von ihm bei Übergabe der Steuerung gewählte Lenkeinschlag zu einer Gefährdung der Umgebung führen würde.

2. Verfahren gemäß Anspruch 1, **dadurch gekennzeichnet, dass** das Fahrmanöver ein Ausparkmanöver aus einer Parklücke (1) ist.

3. Verfahren gemäß Anspruch 1 oder 2, **dadurch gekennzeichnet, dass** der Fahrer informiert wird, wenn die Übergabe der Steuerung erfolgt.

4. Verfahren gemäß einem der Ansprüche 1 bis 3, **dadurch gekennzeichnet, dass** dem Fahrer eine prädizierte Trajektorie (15) aufgrund des Lenkeinschlags und eine optimale Trajektorie (17) zum Zeitpunkt der Übergabe dargestellt werden.

5. Verfahren gemäß einem der Ansprüche 1 bis 4, **dadurch gekennzeichnet, dass** der Fahrer zum Zeitpunkt der Übergabe der Steuerung Hinweise erhält, wie er die optimale Trajektorie (17) erreicht.

6. Verfahren gemäß einem der Ansprüche 1 bis 5, **dadurch gekennzeichnet, dass** Fahrbahninformationen zur Erkennung von Einbahnstraßen oder Straßen mit mehreren Fahrbahnen in eine Richtung genutzt werden, um unnötige Warnungen zu vermeiden.

7. Verfahren gemäß einem der Ansprüche 1 bis 6, **dadurch gekennzeichnet, dass** bei einer Bewegung des Fahrzeugs entlang der aufgrund des Lenkradwinkels prädizierten Trajektorie (15) nach Übergabe an den Fahrer und bei Erfassung eines Objekts, mit dem das Fahrzeug (11) bei unveränderter Richtung kollidieren würde, eine automatische Notbremsung durchgeführt wird.

8. Vorrichtung zur Durchführung des Verfahrens gemäß einem der Ansprüche 1 bis 7, umfassend Mittel zur Steuerung des Fahrzeugs (11) entlang einer zuvor berechneten Trajektorie sowie Mittel zur Ausgabe von Informationen über die Umgebung des Fahrzeugs (11) und geeignete Lenkeinstellungen an den Fahrer vor und/oder während der Übergabe der Steuerung an den Fahrer, **dadurch gekennzeichnet, dass** die Vorrichtung eingerichtet ist, eine Warnung auszugeben, wenn der vom Fahrer bei Übergabe der Steuerung gewählte Lenkeinschlag zu einer Gefährdung der Umgebung führen würde.

9. Vorrichtung gemäß Anspruch 8, **dadurch gekennzeichnet, dass** die Mittel zur Steuerung des Fahrzeugs (11) entlang einer zuvor berechneten Trajektorie ein Einparkhilfesteuergerät umfassen.

10. Vorrichtung gemäß Anspruch 8 oder 9, **dadurch gekennzeichnet, dass** als Mittel zur Ausgabe von Informationen ein Monitor verwendet wird, auf dem in zweidimensionaler Darstellung in Draufsicht Fahrzeug (11) und Trajektorien (15, 17) sowie Objekte in der Umgebung des Fahrzeugs (11) dargestellt werden.

## Claims

1. Method for assisting a driver of a vehicle (11) during a driving manoeuvre, during which the vehicle (11) is guided automatically along a previously calculated trajectory or the lateral guidance is carried out automatically for travel along the trajectory, and after the driving manoeuvre has ended the control of the vehicle (11) is returned to the driver, wherein before and/or during the transfer of control to the driver information about the surroundings of the vehicle (11) and suitable steering settings are communicated to the driver, **characterized in that** the driver receives a warning if the steering lock which is selected by him during the transfer of control would cause the surroundings to be endangered.

2. Method according to Claim 1, **characterized in that** the driving manoeuvre is a manoeuvre of removing a vehicle from a parking space (1).

3. Method according to Claim 1 or 2, **characterized in that** the driver is informed when the transfer of control takes place.

4. Method according to one of Claims 1 to 3, **characterized in that** a predicted trajectory (15) on the basis of the steering lock and an optimum trajectory (17) at the time of the transfer are presented to the driver.

5. Method according to one of Claims 1 to 4, **characterized in that** at the time of the transfer of control the driver receives instructions as to how he reaches the optimum trajectory (17).

6. Method according to one of Claims 1 to 5, **characterized in that** carriageway information for detecting one-way roads or roads with multiple carriageways is used in one direction in order to avoid unnecessary warnings.

7. Method according to one of Claims 1 to 6, **characterized in that** when the vehicle moves along the trajectory (15) which is predicted on the basis of the steering wheel angle, automatic emergency braking is carried out after transfer to the driver and when an object with which the vehicle (11) would collide if the direction is not changed is detected.

8. Device for carrying out the method according to one of Claims 1 to 7, comprising means for controlling the vehicle (11) along a previously calculated trajectory and means for outputting information about the surroundings of the vehicle (11) and suitable steering settings to the driver before and/or during the transfer of control to the driver, **characterized in that** the device is configured to output a warning if the steering lock selected by the driver when control is transferred would cause the surroundings to be endangered.

9. Device according to Claim 8, **characterized in that** the means for controlling the vehicle (11) along a previously calculated trajectory comprise a parking aid control device.

10. Device according to Claim 8 or 9, **characterized in that** a monitor, on which the vehicle (11) and trajectories (15, 17) as well as objects in the surroundings of the vehicle (11) are represented in a two-dimensional representation in plan view is used as means for outputting information.

## Revendications

1. Procédé d'assistance d'un conducteur d'un véhicule (11) lors d'une manoeuvre de conduite, lors de laquelle le véhicule (11) est guidé automatiquement le long d'une trajectoire préalablement calculée ou le guidage transversal en vue du déplacement le long de la trajectoire est effectué automatiquement et, après avoir terminé la manoeuvre de conduite, la commande du véhicule (11) est de nouveau transmise au conducteur, des informations à propos de l'environnement du véhicule (11) des réglages appropriés de la direction étant communiquées au conducteur avant et/ou pendant la cession de la commande au conducteur, **caractérisé en ce que** le conducteur reçoit un avertissement lorsque le braquage de direction qu'il sélectionne lors de la cession de la commande pourrait donner lieu à une mise en danger de l'environnement.

2. Procédé selon la revendication 1, **caractérisé en ce que** la manoeuvre de conduite est une manoeuvre de sortie d'un emplacement de stationnement (1).

3. Procédé selon la revendication 1 ou 2, **caractérisé en ce que** le conducteur est informé lorsque la cession de la commande a lieu.

4. Procédé selon l'une des revendications 1 à 3, **caractérisé en ce qu'**une trajectoire prédite (15) du fait du braquage de la direction et une trajectoire optimale (17) sont représentées à l'attention du conducteur au moment de la cession.

5. Procédé selon l'une des revendications 1 à 4, **caractérisé en ce qu'**au moment de la cession, le conducteur reçoit une notification lui indiquant comment il atteint la trajectoire optimale (17).

6. Procédé selon l'une des revendications 1 à 5, **caractérisé en ce que** des informations de voie de circulation destinées à reconnaître les routes à une voie ou les routes à plusieurs voies de circulation dans une direction sont utilisées afin d'éviter des avertissements inutiles.

7. Procédé selon l'une des revendications 1 à 6, **caractérisé en ce que** lors d'un déplacement du conducteur le long de la trajectoire prédite (15) du fait du braquage de la direction, un freinage d'urgence est effectué automatiquement après la cession au conducteur et en cas de détection d'un objet avec lequel le véhicule (11) entrerait en collision si la direction reste inchangée.

8. Dispositif pour mettre en oeuvre le procédé selon l'une des revendications 1 à 7, comprenant des moyens pour commander le véhicule (11) le long d'une trajectoire préalablement calculée ainsi que des moyens destinés à délivrer des informations à propos de l'environnement du véhicule (11) et des réglages appropriés de la direction au conducteur avant et/ou pendant la cession de la commande au conducteur, **caractérisé en ce que** le dispositif est conçu pour délivrer un avertissement lorsque le braquage de direction sélectionné par le conducteur lors de la cession de la commande pourrait donner lieu à une mise en danger de l'environnement.

9. Dispositif selon la revendication 8, **caractérisé en ce que** les moyens de commande du véhicule (11) le long d'une trajectoire préalablement calculée comportent un contrôleur d'aide à l'entrée en stationnement.

10. Dispositif selon la revendication 8 ou 9, **caractérisé en ce qu'**un moniteur est utilisé en tant que moyens pour délivrer des informations, sur lequel sont représentés une représentation bidimensionnelle vue de dessus du véhicule (11) et des trajectoires (15, 17) ainsi que les objets dans l'environnement du véhicule (11).
